**Europäisches Patentamt**

**European Patent Office**

**Office européen des brevets**

(19)

(11) Veröffentlichungsnummer: **0 272 622 B1**

(12) **EUROPÄISCHE PATENTSCHRIFT**

(45) Veröffentlichungstag der Patentschrift: **02.01.92**

(51) Int. Cl.⁵: **C01B 17/66**

(21) Anmeldenummer: **87118719.1**

(22) Anmeldetag: **17.12.87**

(54) **Kontinuierliches Verfahren zur Herstellung von Lösungen aus niederviskosen Lösungsmitteln und hochviskosen, pastösen Produkten.**

(30) Priorität: **24.12.86 DE 3644459**

(43) Veröffentlichungstag der Anmeldung:
**29.06.88 Patentblatt 88/26**

(45) Bekanntmachung des Hinweises auf die
Patenterteilung:
**02.01.92 Patentblatt 92/01**

(84) Benannte Vertragsstaaten:
**AT BE CH DE ES FR GB IT LI NL SE**

(56) Entgegenhaltungen:
**EP-A- 0 102 759     EP-A- 0 153 671**
**DE-A- 2 447 369     GB-A- 2 086 249**
**US-A- 4 056 259     US-A- 4 085 463**
**US-A- 4 113 688**

(73) Patentinhaber: **BASF Aktiengesellschaft**
**Carl-Bosch-Strasse 38**
**W-6700 Ludwigshafen(DE)**

(72) Erfinder: **Kiener, Volker, Dr.**
**Kalmitstrasse 20**
**W-6714 Weisenheim(DE)**
Erfinder: **Nonn, Guenther, Dr.**
**Weisenheimer Strasse 26**
**W-6719 Dackenheim(DE)**
Erfinder: **Seid, Bernhard**
**Albrecht-Duerer Ring 28**
**W-6710 Frankenthal(DE)**
Erfinder: **Schewski, Harald**
**Goethestrasse 21**
**W-6714 Weisenheim(DE)**
Erfinder: **Buellmeyer, Karl**
**Radolfstrasse 8 b**
**W-6710 Frankenthal(DE)**

EP 0 272 622 B1

## Beschreibung

Die Erfindung betrifft ein Verfahren zur Herstellung von homogenen Lösungen aus Wasser und hochviskosen, pastösen Natriumdithionitzubereitungen. (Im weiteren als NDTZ geschrieben.)

Lösungen aus Wasser und NDTZ werden vorzugsweise als Bleich- und Reduktionsmittel verwendet, beispielsweise bei der Papierherstellung und in der Textilindustrie als Reduktionsmittel beim Färben.

Zur Herstellung dieser Lösungen gibt es zwei Möglichkeiten,

a) Wasser und pulverförmiges Natriumdithionit, und

b) Wasser und hochviskose, pastöse NDTZ.

Für die Herstellung von Lösungen aus Wasser und pulverförmigem Natriumdithionit sind erprobte Pulverlöseanlagen, beispielsweise von der Firma Bran und Lübbe, im Einsatz.

Die Herstellung von Lösungen mittels pulverförmigem Natriumdithionit hat jedoch gravierende Nachteile, beispielsweise kam es in der Vergangenheit beim Handling des pulverförmigen Natriumdithionit durch Selbstentzündung des Pulvers zu Bränden. Des weiteren wurden beim Herstellen der Lösungen infolge Luftoxidation der Lösung - ausgelöst durch zu große Verweilzeiten der Lösung in den Pulverlöseanlagen - Wirkstoffverluste festgestellt. Die handelsüblichen Pulverlöseanlagen sind aufgrund fehlender Mischintensität für den Einsatz von hochviskosen, pastösen NDTZ ungeeignet.

Für die Herstellung von Lösungen aus Wasser und hochviskosen, pastösen NDTZ sind im allgemeinen Löseanlagen im Einsatz, die aus einem Ansatzgefäß und einer Dispergiereinheit bestehen. Bei anderen Löseanlagen ist die Dispergiereinheit direkt im Ansatzgefäß integriert.

Bei den aus einem Ansatzgefäß und einer Dispergiereinheit bestehenden Anlagen wird das im Ansatzgefäß vorgelegte Wasser durch die Dispergiereinheit hindurch und anschließend in das Ansatzgefäß zurück umgewälzt. Gleichzeitig wird die zu lösende hochviskose, pastöse NDTZ über eine Einfüllöffnung dem Ansatzgefäß zugeführt und durchströmt mit dem Wasser die Dispergiereinheit. Diese Verfahrensweise wird solange durchgeführt, bis eine ausreichende und homogene Lösung aus Natriumdithionit und Wasser erreicht wird.

Bei dieser Verfahrensweise werden verschiedene Effekte erreicht.

1. Die pastenförmigen Produktteilchen werden zerteilt und die darin enthaltenen Feststoffteilchen zerkleinert, so daß nach dem Passieren der Dispergiereinheit eine größere Oberfläche für den Angriff des Lösungsmittels zur Verfügung steht.

2. Die angelösten Oberflächen werden in der Dispergiereinheit in besonderen Scherspalten und Kanten abgetragen.

3. Durch hohe Turbulenzen wird die Oberfläche der Feststoffteilchen ständig mit dem Lösungsmittel zusammengebracht. Bis zum erneuten Ansaugen der zum Ansatzgefäß zurückgeförderten Feststoffteilchen kann das Lösungsmittel erneut eindiffundieren.

Die geforderten homogenen und feststoff-freien Lösungen lassen sich mittels obigen Verfahrens häufig nicht herstellen, da sich ungelöste, feste Partikel in dem Ansatzgefäß in den nachgeschalteten Rohrleitungen und Armaturen infolge der Dichteunterschiede absetzen, wobei durch mechanische Schwierigkeiten das Dispergierverfahren zum Erliegen kommt, was hohe Wirkstoffverluste zur Folge hat. Ausgeschleuste, ungelöste Feststoffpartikel beeinflussen zudem den nachfolgenden Bleich- bzw. Färbeprozeß nachteilig. Des weiteren sind beim Herstellen von Lösungen aus den NDTZ und Wasser in diesen Lösungen aufgrund der Verweilzeiten und durch Zutritt von Luftsauerstoff erhebliche Wirkstoffverluste festzustellen.

Desweiteren sind in verschiedenen Druckschriften ähnliche Verfahren aufgezeigt: GB-A-2 086 249: In dieser Schrift ist erwähnt, daß zum Vermischen von hoch- und niederviskosen Flüssigkeiten statische oder dynamische Mischer oder die Kombination beider verwendet werden, detailliert ist nur ein statischer Mischer zur Lösung des Problems aufgezeigt.

US-A-4 085 463: In der Zusammenfassung ist ausgeführt, daß die aufgezeigte Mischapparatur dafür geeignet ist, Komponenten zu mischen, die in der Viskosität zwischen 1 - 100 000 centipoise = 100 Pa.s variieren. Die pastösen NDTZ haben eine Viskosität, die mindestens dem 10-fachen von 100 Pa.s entspricht.

EP-A-102 759: In dieser Druckschrift ist ein Verfahren und eine Vorrichtung beschrieben, in der eine Dispersion, bestehend aus Polymerpartikeln in einer Flüssigkeit, beispielsweise Öl, mit Wasser vermischt wird.

Der vorliegenden Erfindung lag daher die Aufgabe zugrunde, ein Verfahren bereitzustellen, das einerseits das Herstellen von homogenen Lösungen aus Wasser und NDTZ ermöglicht, wobei die Lösungskonzentration bis nahe an die Löslichkeitsgrenze einstellbar ist und andererseits Wirkstoffverluste durch zu große Verweilzeiten bei der Lösungsherstellung und -verteilung und Luftzutritt vermieden werden, und gleichzeitig mechanische Störungen ausgeschaltet werden.

Die Aufgabe wird erfindungsgemäß dadurch gelöst, daß die Herstellung der Lösungen in ohne jeden Totraum hintereinander geschalteten statischen und dynamischen Mischern in Zeitraum von Sekunden erfolgt und gleichzeitig Luftzutritt vermieden wird.

Weitere erfindungsgemäße Merkmale der Erfindung sind Gegenstand des Unteranspruchs.

Das erfindungsgemäße Verfahren ist in der Zeichnung dargestellt und wird im folgenden näher erläutert.

Figur 1 zeigt ein Verfahrensfließbild des Verfahrens.

Figur 2 zeigt den erfindungsgemäß eingesetzten statischen Mischer.

In dem Vorratsgefäß (1) - ausgerüstet mit einem Auslaufkonus - wird die hochviskose, pastöse NDTZ (2) vorgelegt. Mittels eines Förderorgans (3) wird die NDTZ über eine Rohrleitung dem statischen Mischer (4) zugeführt. Gleichzeitig wird über ein Förderorgan (5) Wasser (6) dem statischen Mischer zugeführt. In diesem statischen Mischer - der nachstehend detailliert beschrieben wird - beginnt die Herstellung hochkonzentrierter, homogener Lösungen bei kurzen Verweilzeiten. Unmittelbar nach dem statischen Mischer - ohne jeden Totraum - ist der dynamische Mischer (7) angeordnet, so daß die herzustellende Lösung unmittelbar in den dynamischen Mischer zur nächsten Behandlung gelangt. Mittels eines weiteren Förderorgans (8) wird die fertiggestellte, hochkonzentrierte, homogene Lösung (9) der Verwendung, beispielsweise zur Bleichung eines Holzschliffes zugeführt. Als Förderorgan (3) erwies sich eine Exzenterschneckenpumpe, die bzglch. der Drehzahl stufenlos regelbar war, als vorteilhaft.

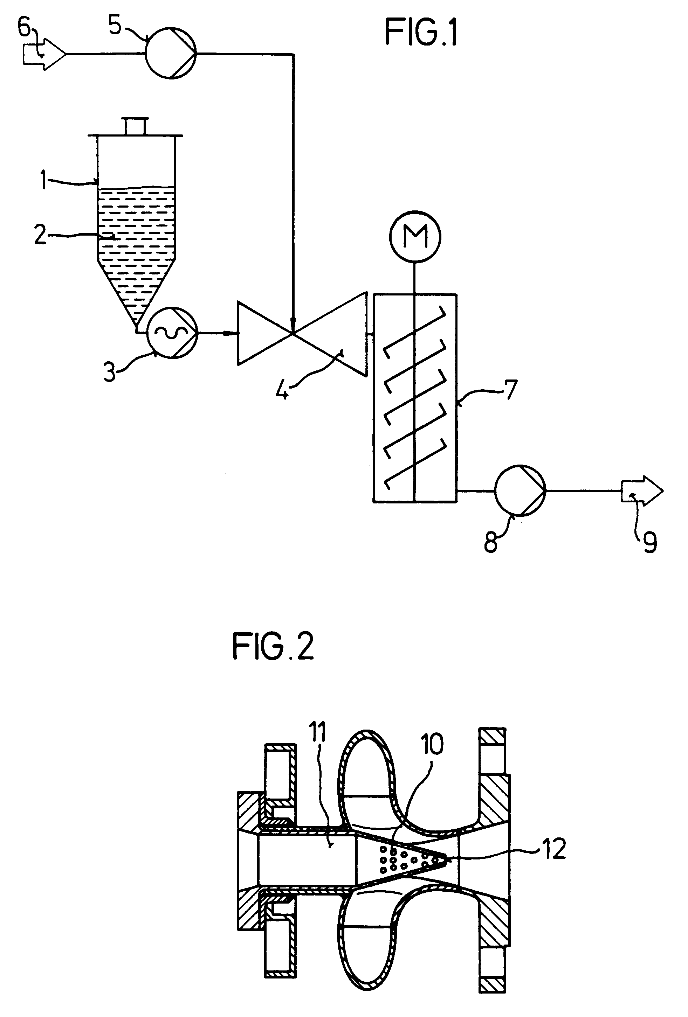

Die durchzuführende, kontinuierliche Herstellung hochkonzentrierter, homogener Lösungen bei kurzen Verweilzeiten erfordert extrem gute Stoffaustauschbedingungen. Für die in der NDTZ enthaltene Feststoffpartikel wurde eine mittlere Teilchengröße von ca. 160 $\mu$m ermittelt. Daher wurde zunächst im statischen Mischer eine Vorzerteilung und Oberflächenvergrößerung sowie das Anlösen der hochviskosen, pastösen NDTZ durchgeführt. Dies erfolgte dadurch, daß die NDTZ durch zahlreiche am Umfang gleichmäßig verteilte Bohrungen (10) einer konischen Düse (11) -siehe Figur 2 - gepreßt wurde. Die am Ende der Düse angeordnete größere Bohrung (12) dient als Entlastungsöffnung. Hierdurch wird der Abfluß größerer auf Inhomogenitäten zurückzuführende Agglomerate von Feststoffteilchen ermöglicht, wodurch ein Verstopfen der Bohrungen (10) der Düse (11) verhindert wird. Ein derartiger Zustand kann auch nach Stillstand oder beim Anfahren der Anlage auftreten, wenn die hochviskose, pastöse Substanz mit Wasser in Berührung steht, und sich hierbei an der Oberfläche infolge Überlöslichkeiten größere Feststoffpartikel ausbilden. Im Vergleich zu konischen, diffusorartigen oder zylindrischen Bauteilen, bei denen diese Entlastungsöffnung fehlt, wurden deutliche Vorteile erzielt.

Im Bereich der aus den Bohrungen austretenden, dünnen Pastenstränge - ca. 2 mm Durchmesser - wird das Wasser mit hoher Geschwindigkeit heran- und vorbeigeführt. Hierdurch werden die Pastenstränge zunächst abgeschnitten und anschließend die Pastenteilchen zerteilt und angelöst. Die hierbei erreichbaren Lösungsgeschwindigkeiten sind proportional dem Konzentrationsgefälle. Dieses ist umso größer je kleiner die Grenzschichtdicke (Diffusionszone) und die Konzentration der die Teilchen umgebenden Flüssigkeit ist, d.h. je mehr höher konzentrierte Lösung durch turbulente Konvektion aus der Nähe der Pastenteilchen wegtransportiert wird. Durch die geometrischen Abmessungen in diesem Bereich des statischen Mischers werden stets hohe Turbulenzgrade in der Strömung erreicht.

Wesentlich für die Erzeugung homogener Lösungen ist der konstante Abfluß der Flüssigkeit und der noch ungelösten Feststoffteilchen. Durch die totraumfreie Ausbildung des statischen Mischers können sich feste ungelöste Teilchen nicht absetzen und aufbauen.

Der dynamische Mischer hat die Aufgabe, die bereits weitgehend zerteilten und angelösten Feststoffteilchen rasch weiter zu zerkleinern, Feststoffmoleküle voneinander zu trennen und diese gleichmäßig in der Flüssigkeit zu verteilen. Der für die Beschleunigung des Lösevorganges als maßgeblich angesehene Stoffübergangskoeffizient muß im dynamischen Mischer gegenüber dem statischen Mischer weiter vergrößert werden. Da sich Temperaturveränderungen beim Lösen der NDTZ in Wasser kaum auswirken, bleiben als wesentliche Einflußgrößen die Steigerung von Diffusionskoeffizienten und Leistungsdichten bei dynamischen Mischern. In kleinvolumigen, hochturbulenten Scherspalten wurden ungewöhnlich hohe Stoffübergangskoeffizienten und kleine Lösezeiten erzielt. Besonders bewährt für die Lösung der Aufgabe haben sich Aggregate, die mehrstufig aufgebaut sind, d.h. über von Stufe zu Stufe enger werdende und kleinvolumige Scherspalte verfügen. Mit derartigen Aggregaten und dem vorgeschalteten statischen Mischer können aus den NDTZ und Wasser vollständig homogene Lösungen b is zu 220 g/l Wasser bei Lösezeiten im Bereich einiger Sekunden hergestellt werden. Bei niedrigeren Konzentrationen läßt sich die Aufgabe aufgrund der ausgezeichneten Wirkungsweise des statischen Mischers mit weniger intensiv arbeitenden Apparaten durchführen. Die Zulaufbedingungen der zu lösenden NDTZ und des Wassers haben einen wesentlichen Einfluß auf die Homogenität der herzustellenden Lösung. So muß insbesondere beim Dosieren der hochviskosen, pastösen NDTZ dafür gesorgt werden, daß nahezu pulsationsfreie Stoffströme realisiert werden. Das erfindungsgemäße Löseverfahren hat außerdem den Vorteil, daß die Stoffströme aufgrund von Meß- und Regeleinrichtungen sehr genau ausgeregelt werden.

Aufgrund der geschlossenen Lösungsherstellung und anschließender Verteilung - hier nicht weiter beschrieben, da nicht erfindungswesentlich - also ohne Zwischen- oder Pufferbehälter wird Luftzutritt vermieden. Für die Realisierung kurzer Verteilungszeiten kann bei Verwendung enger Rohrquerschnitte eine Pumpe zugeschaltet werden, mittels der die Übergabe der Lösung beispielsweise in den Bleichprozeß erfolgt. Bei dieser Lösungsherstellung und Verteilung konnten keine Wirkstoffverluste gegenüber dem Ausgangsprodukt NDTZ festgestellt werden.

**Patentansprüche**

1. Kontinuierliches Verfahren zur Herstellung von homogenen Lösungen aus Wasser und hochviskosen, pastösen Natriumdithionitzubereitungen, dadurch gekennzeichnet, daß die Herstellung der Lösungen in ohne jeden Totraum hintereinandergeschalteten statischen und dynamischen Mischern im Zeitraum von Sekunden erfolgt und gleichzeitig Luftzutritt vermieden wird.

2. Verfahren nach Anspruch 1, dadurch gekennzeichnet, daß im statischen Mischer hohe Turbulenzgrade erzielt werden.

**Claims**

1. A continuous process for preparing a homogeneous solution of water and a high-viscosity, pasty sodium dithionite formulation, by preparing the solution in static and dynamic mixers connected in series in a matter of seconds while at the same time avoiding the ingress of air.

2. A process as claimed in claim 1, wherein high degrees of turbulence are obtained in the static mixer.

**Revendications**

1. Procédé continu pour la fabrication de solutions homogènes d'eau et de préparations de dithionite de sodium pâteuses et à haute viscosité, caractérisé par le fait que la fabrication des solutions s'effectue en une période de temps de secondes, dans des mélangeurs statiques et dynamiques montés les uns derrière les autres sans aucun espace mort et qu'on évite une entrée d'air simultanée.

2. Procédé selon la revendication 1, caractérisé par le fait que de hauts degrés de turbulence sont obtenus dans le mélangeur statique.

# FIG.1

# FIG.2